# EUROPEAN PATENT APPLICATION

(11) **EP 2 755 173 A1**
(43) Date of publication of application: **16.07.2014**
(21) Application number: 13150875.6
(22) Date of filing: 10.01.2013
(51) Int. Cl.: G06Q 10/04, G06Q 50/26

(54) **Computer-implemented method, program and apparatus for coupling flooding simulation and evacuation simulation in a populated area**

(71) Applicant: FUJITSU LIMITED, Kawasaki-shi, Kanagawa 211-8588 (JP)
(72) Inventor: Georgescu, Serban, London, Greater London W5 3PL (GB); Chow, Peter, Gillingham, Kent ME7 3AH (GB)
(74) Representative: Wilding, Frances Ward

(57) **Abstract**

A computer-implemented method of coupling flooding simulation and evacuation simulation in a populated area, comprising inputting input geometry representing physical structures in a populated area; processing the input geometry to provide modelling geometry; creating a computational fluid dynamics CFD model suitable for CFD analysis from the modelling geometry; creating an evacuation model suitable for population evacuation analysis from the modelling geometry.

## Description

The present invention relates to the practical applications of simulation in flooding and evacuation planning. Evacuation planning is becoming a requirement for the safeguard of populations and property in case of disasters such as fires and flooding. In particular, global warming and rising sea levels have lead to an increase in the frequency of major floods, especially in coastal cities and cities which lie close to the sea level. In another example application, chemical spillages and leaks of fluids can lead to flooding, for instance in industrial settings, and in these circumstances evacuation is also required.

As such, computer simulations of flooding and evacuation scenarios are important tools for understanding these phenomena and for discovering ways in which to minimize the loss of life and property during such events.

One aspect of particular importance is modelling the behaviour of people. Crowd modelling during flooding events allows city planners and policy makers to analyze and streamline the overall evacuation process. One method which is considered particularly suitable for such a simulation is agent based modelling.

An agent-based model (ABM) (also sometimes related to the term multi-agent system or multi-agent simulation) is a computational model for simulating the actions and interactions of autonomous agents with a view to assessing their effects on the system as a whole. In many models, each agent is an individual (person). In order to simulate the individual's behaviour, the individual is given attributes, such as a moveable position and rule-based reactions to stimuli, including other individuals.

Agent based evacuation models like the EXODUS software developed at University of Greenwich provide realistic evacuation simulations by modelling the psychology of the people, the interaction between them and the interaction between people and environment. In essence, each agent may be triggered by danger represented in the software (such as fire, smoke, flooding etc) to evacuate an area which is dangerous using individual rule-based escape paths and speeds.

Flood modelling may be used to provide input data for an evacuation model. Flood modelling is usually based on computational fluid dynamics. Computational fluid dynamics, often abbreviated as CFD, is a branch of fluid mechanics that uses numerical methods and algorithms to solve and analyze problems that involve fluid flows.

There are many approaches to CFD modelling, but the same basic three-stage procedure is almost always followed.

During pre-processing, the geometry (physical bounds) of the problem is defined; and the volume occupied by the fluid is divided into discrete cells (the mesh). The mesh may be uniform or non uniform. The physical modelling is defined using appropriate equations and boundary conditions are defined. This involves specifying the fluid behaviour and properties at the boundaries of the problem. For transient problems, the initial conditions are also defined.

In processing the simulation is started and the equations are solved iteratively as a steady-state or transient.

Finally a postprocessor is used for the analysis and visualization of the resulting solution.

Very recently, with increasing advances in large scale computing technology, it has become possible to link CFD based city flooding models with agent based evacuation models. These links can provide increased realism, as it is possible for the agents to react directly to the flooding situation as it develops. Conversely, in two-way coupled simulations, the path taken by the water can be influenced by the action taken by the agents. An example of such a coupled simulation can be found in Mordvintsev et al, Simulation of city evacuation coupled to flood dynamics, Proceedings of Pedestrian and Evacuation Dynamics, June 2012.

Coupled CFD flooding - agent based evacuation simulations, like the one described in Mordvintsev, requires setting up two different models, one for CFD and one for the agent based evacuation simulations. These simulations have very different requirements. The CFD model requires a representation of the city as three dimensional (3D) geometry which is water-tight. On the other hand, agent-based evacuation models like EXODUS or one the used in Mordvintsev can require a two-dimensional 2D plan of the city. There is no need for the geometry to be watertight. Automatic creation of these geometric models for CFD and evacuation simulation) is not know in the prior art.

According to an embodiment of one aspect of the invention there is provided a computer-implemented method of coupling flooding simulation and evacuation simulation in a populated area, comprising: inputting input geometry representing physical structures in a populated area; processing the input geometry to provide modelling geometry; creating a computational fluid dynamics CFD model suitable for CFD analysis from the modelling geometry; and creating an evacuation model suitable for population evacuation analysis from the modelling geometry.

The inventors have come to the realisation that it would be desirable for the CFD and the evacuation model to be consistent, for example such that data can be easily transferred from one model to the other.

By using the same input geometry for the CFD simulation and the evacuation simulation, the flooding data obtained via CFD is consistent with the geometry used in the agent based simulation, resulting in an easier and more efficient process and potentially better accuracy of the results. In prior art methodology, the models are created independently, and this can lead to difficulties and inefficiencies.

Particular embodiments of the invention can automatically generate coherent geometries for two models, a CFD model for flooding simulation and an agent based model for evacuation simulation, from the same input city (or other populated area) geometry source.

The term "flooding" as used herein is not restricted to water. Methods of invention embodiments can be used as a tool in combating spillages, leakages and other undesirable of occurrences of any fluid. One example is oil spillage in an industrial situation, such as within a processing plant.

The input geometry can be of any quality and/or format. In some embodiments, the input geometry is geometry data such as triangulated data (faceted data) which is often known as urban navigation data (such as Google Earth, Google maps, Bing maps etc). The data may thus be of lower-quality than GIS (Geographical Information System) or other data required for CFD simulations. It may be not directly suitable for CDF analysis; for example it could include errors and/or omissions which require removal before it can be used for CFD modelling. Equally, the input geometry might require processing to cure errors and/or omissions in the input geometry for evacuation modelling. For instance there may not be complete information as to the geometry of ground level.

The input geometry may be processed in any suitable way to provide modelling geometry (which has had at least some errors/omissions cured). The processing may be automatic.

The input geometry may represent part or all of a populated area, in which people are likely to be present, such as a city, industrial area or other conglomeration. In some embodiments, the processing includes cropping the input geometry to select a target area for simulation. This is useful if only a part of the input area is the target geometry. Cropping can use a Boolean operation such as intersection between the input geometry and the target area.

The processing may include recovering connectivity information related to the adjacency of facets in the input geometry. Each facet (flat plane) in the geometry data making up the 3D faces representing buildings, industrial structures etc may include 3 (or more) nodes or vertices and common edges between the facets may be discovered using the node co-ordinates to find shared nodes.

The input data may be 3D data giving a complete description of a 3D arrangement, or enhanced 2D data. The enhanced 2D data may for example include polygons describing the base of buildings (or other objects) coupled with height data. If the input data is 3D data , the processing may include detection of vertices and edges on ground level to form ground level data making up the modelling geometry. These facet vertices and facet edges can represent parts of buildings or other physical structures at ground level.

The ground level may be detected by analysing which edges of the facets neighbour one facet only (for example if the geometry data does not describe the ground) or by analysing the angle between facets to detect a region in which vertical (building) geometry is adjacent to horizontal (ground) geometry.

Once the modelling geometry has been created it is used for both the CFD simulation and the evacuation simulation, possibly with some further processing.

The evacuation model is preferably created using the ground level data to form polygons (for example representing buildings) of a two-dimensional model. Additional input data may be provided, for example as to agent positions, response to water levels (such as movement to exit, redirection, fatality), signage and further stimuli such as movement of other agents.

For the CFD model, the modelling geometry should be water tight. The ground level data may be rendered water tight in any suitable way. For example, one or more facets may be added to fill one or more gaps between a lower edge of the physical structures in the modelling geometry and the actual ground level.

The method may further include one or more healing processes for correction when there are any edges adjacent to one facet only which are not at ground level.

The method may include combination of the modelling geometry with additional data related to a flooding event to form the CFD model. Such data may include, for example, flood water (or other fluid) flow rates and/or direction. One preferred type of additional data is sensory data, which may be real-time or historical data. This can allow automatic input of actual fluid height, fluid velocity of fluid chemical properties, for example. Another example of additional data is data from a different simulation. The method may including running the CFD simulation to create flooding data, which is transferred to and used in the evacuation model. For example, the CFD model may provide spatial data as to the height (and optionally speed and/or direction) of the flood (or other fluid) at various positions over a target area as it develops during the simulation time. The data may be in the form of a fluid level at the centre of each cell formed by a grid.

The method may include running the evacuation model to create agent action data, which is transferred to and used in the CFD model, and to create evacuation data. The agent action data may be presented in the form of data related to barrier construction or activation.

The method may include running the CFD and evacuation simulations to simulate a flooding event and preferably outputting results in the form of flooding data and/or evacuation data demonstrating an evacuation result of the flooding. The evacuation data can include any of positioning of agents (during and/or after simulation), fatalities of agents, injuries of agents etc. The evacuation data may include a representation of evacuation behaviour over the simulation time, for instance in the form of a 2D or 3D graphical representation depicting the evacuation model and the agents. The graphical representation may distinguish between live agents and fatalities.

The combined CFD and evacuation simulation may find application in planning of emergency response to flooding, by testing likely scenarios and assessing evacuation and other emergency response planning.

In some embodiments, simulation outputs may be used to prepare signage, such as emergency evacuation signs at street level. For example, the effect of planned or current signage positioning can be modelled in the evacuation model, so that signage can be suitably positioned in real life. Moreover, the direction of flow seen in the CFD simulation can be used to check that the signage directs evacuees appropriately.

In a more advanced embodiment, the combined simulation can be run at the time of flooding to predict a real-time flooding/evacuation situation and inform emergency services and/or trigger remote-operated signage. The simulation may show future results of a developing emergency in time for appropriate action.

According to one embodiment of a second aspect there is provided a computer program which when executed on a computing device implements a method of coupling flooding simulation and evacuation simulation in a populated area, comprising: inputting input geometry representing physical structures in a populated area; processing the input geometry to provide modelling geometry; creating a computational fluid dynamics CFD model suitable for CFD analysis from the modelling geometry; and creating an evacuation model suitable for population evacuation analysis from the modelling geometry.

According to one embodiment of a third aspect there is provided an apparatus arranged to couple flooding simulation and evacuation simulation in a populated area, the apparatus comprising: an input unit operable to receive input geometry representing physical structures in a populated area; a geometry processing module arranged to process the input geometry to provide modelling geometry; a computational fluid dynamics CFD module arranged to create a CFD model suitable for CFD analysis from the modelling geometry; and an evacuation model module arranged to create an evacuation model suitable for population evacuation analysis from the modelling geometry.

The apparatus may include a CFD simulation module and an evacuation simulation module for running the two simulations and a transfer module for transferring data between the simulations.

The apparatus may further include other components such as a graphical user interface GUI for the user to input data corresponding to different scenarios and output means, for example in the form of a screen for visualisation of the results and/or a printer to provide printed results.

Features and sub features of any of these aspects may be freely combined.

The invention can be implemented in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules.

A computer program can be in the form of a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Each processor may have one or more cores. The method steps can be executed by a cluster of computers, each having one or more processors.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order and still achieve desirable results.

The apparatus according to preferred embodiments is described as configured or arranged to carry out certain functions. This configuration or arrangement could be by use of hardware or middleware or any other suitable system. In preferred embodiments, the configuration or arrangement is by software.

According to a further aspect there is provided a program which when loaded onto a computing apparatus configures the computing apparatus to carry out the method steps according to any of the preceding method definitions or any combination thereof.

Elements of the invention have been described using the term "module". The skilled person will appreciate that this term and its equivalents may refer to parts of the apparatus that are spatially separate but combine to serve the function defined. Equally, the same physical parts of the apparatus may provide two or more of the modules defined.

The invention will now be described with reference to specific non-limiting embodiments as shown in the drawings, in which:
Figure 1 is a schematic diagram of an embodiment of the invention;
Figure 2 is a schematic layout of a processing system implementing an embodiment of the invention;
Figure 3 is a flow diagram showing processing according to an embodiment of the invention;
Figure 4 is a flow chart showing the functioning of an automatic geometry processing module;
Figure 5 is a 3D representation showing geometry cropping;
Figure 6 is a 3D representation of a city together with a 2D plan formed therefrom;
Figure 7 is a 3D diagram of filling gaps at ground level; and
Figure 8 is a schematic illustration of how new facets are created to fill gaps at ground level.

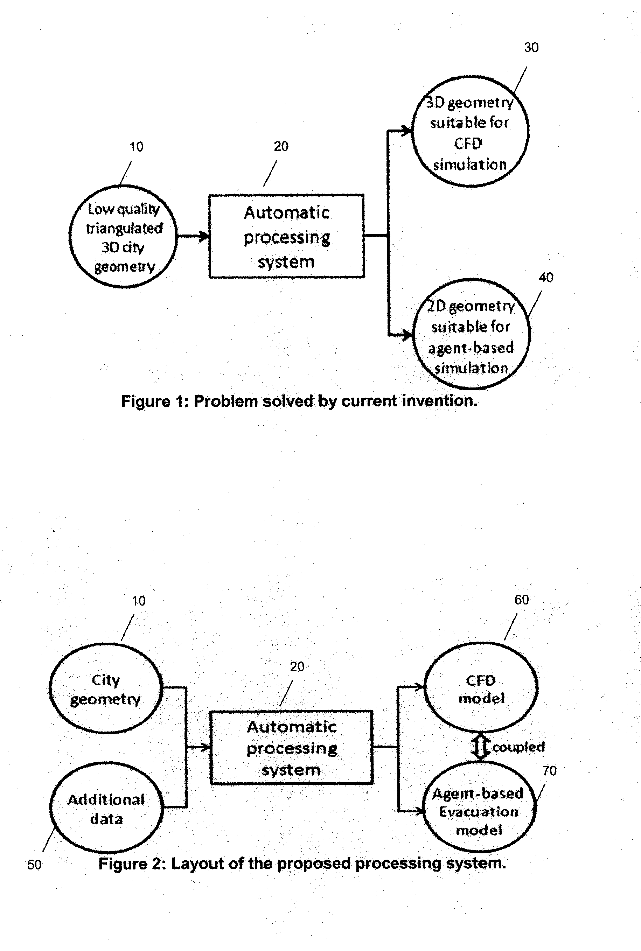

Figure 1 is a simple illustration of how invention embodiments couple evacuation simulation with CFD simulation. Low quality triangulated 3D city geometry 10 is input into an automatic processing system 20, which produces 3D geometry suitable for CFD simulation, as well as 2D geometry suitable for agent-based simulation.

Invention embodiments may automatically generate coherent geometries for two models, a CFD model for flooding simulation and an agent based model for evacuation simulation, from the same input city geometry source.

In the prior art the models are created independently. Moreover, the geometry sources have to be high-quality ones, like data resulting from GIS systems. In contrast, embodiments of the current invention can use lower quality triangulated data, which is readily and generally available for urban navigation or for visualization purposes. For example, possible sources of such data are urban navigation applications like Google Earth, Google Maps, Bing Maps and so on. In Figure 1 and elsewhere we use the expression "low quality" or "lower quality" geometry, which includes geometry data which may contain errors, and is therefore not directly suitable for CFD simulation. The opposite of this is "high-quality" data, which is error-free and thus can be directly used for CFD simulation (without any further processing).

Invention embodiments create an automated geometry processing system able to generate, from a single geometry input source, input data for both a CFD flooding model and for an agent-based evacuation model, which is coherent across the models.

This process is illustrated in Figure 2, in which input geometry data 10 representing the buildings and structures in a city plus additional data 50 (e.g., sensory data, data from another simulation or the direction and flow rate of the flooding fluid) is fed to an automatic system 20.

In one practical application, a live feed of data can be sent to the CFD simulation in the case of real-time flooding simulation. Examples of such sensors are those used for the Thames barrier and other flood barriers. They sense water height or other physical properties at a position within the simulation area. A further specific example is data from a different simulation, for example from a Tsunami simulation. Most Tsunami simulation codes stop at the shoreline. The height and velocity of the water at the shoreline can then be sent to the CFD software simulating the flooding in-land. A yet further example is the addition of chemistry information to the water or other fluid, when simulating flooding with contaminated water.

After analyzing the input geometry and making various modifications to it, the system is able to automatically generate two different pieces of geometry: a water-tight 3D model of the city suitable for CFD simulation 60 and a 2D plan of the city used for the agent-based evacuation model 70. These geometries are consistent with each-other since they are created from the same input data.

The term "city" is used in the following examples and elsewhere for simplicity, but the reader will appreciate that the simulation according to invention embodiments may be of any other suitable populated area (such as an industrial plant or area).

The scope of these invention embodiments is the field of coupled CFD flooding - agent based evacuation simulation as shown by the two-way arrow in figure 2. By using the method described herein, the flooding data obtained via the CFD simulation is consistent with the geometry used in the agent based simulation, resulting in an easier and more efficient coupling process. Flood data from the CFD simulation can be transferred seamlessly to the evacuation simulation. Agent action data may be transferred seamlessly to the CFD simulation.

In simpler simulations, only a one-way coupling may be considered, with no data transfer from the evacuation simulation to the CFD simulation. However, when a two-way coupling is to be considered, such data transfer can take place at any time when the action of the agents has some impact on the geometry.

One example of data related to agent action is the location and size of any ad-hoc barriers (such as sand barriers) built by the agents to stop the flow of the water. In this example, the CFD simulation may require a re-meshing process to take the ad-hoc barriers into account.

Another example is the state of one or more flood gates or flood barriers at pre-defined positions, whose size and location is previously known. The state may be presented in the form of porosity (porosity = 0 means the barrier is present/activated, porosity = 1 means it is not). Using porosity which can be influences by agent action, the actions of the agents can have an impact on the CFD simulation without any need to modifying the geometry (hence there is no need to re-mesh).

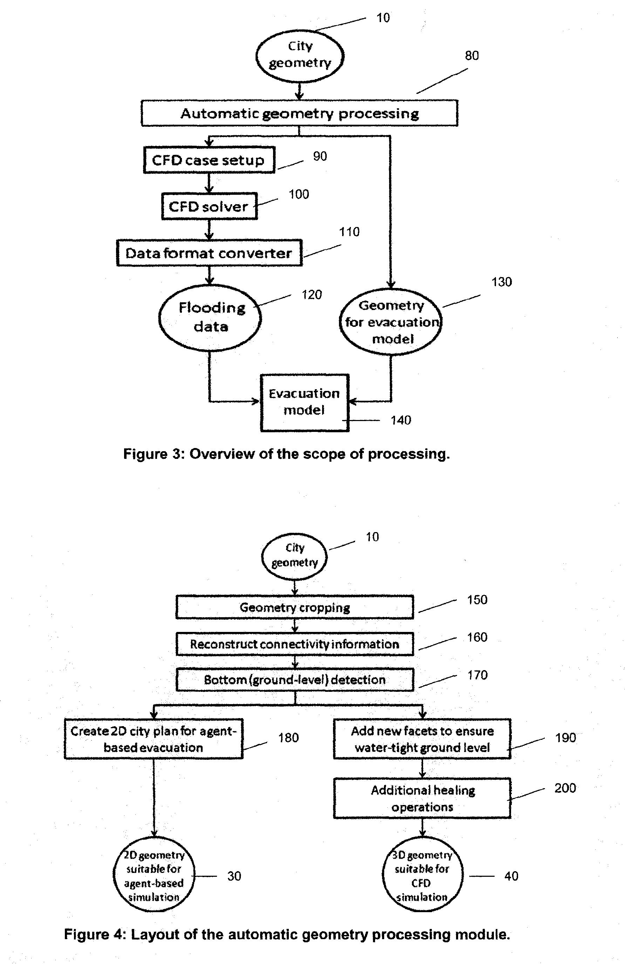

The scope of the processing in the current invention embodiment is shown in figure 3. Input geometry 10 representing the 3D model of buildings and structures in a city is fed to an automatic geometry processing module 80. This module reads and analyzes the geometry in a pre-processing stage. In particular, at this stage, the ground level of the buildings is detected, together with self-intersecting faces and holes in the geometry. This information is used for multiple purposes:
- Building ground level information is used to generate the city geometry 130 used for the agent-based evacuation simulation
- The CFD mesh is reconstructed so that the city geometry lays water-tight on the ground level
- If necessary, healing operations are performed as well

Following the automatic geometry processing process, the pre-processed and now water-tight 3D geometry is combined with additional information to create the model for a CFD based flooding simulation in the CFD case set up module 90. This is fed to a specialized CFD solver 100 in a main processing stage (e.g. OpenFOAM ® is one of the best known in the field). Flooding data is extracted from the data outputted by the CFD solver, converted in a post-processing stage by converter 110 to an appropriate format and transmitted as flooding data to the agent-based flooding simulation 140.

Figure 4 is a flow diagram showing the detailed functioning of a preferred embodiment. City geometry 10 (input geometry) is the initial input and the final outputs are 2D geometry for evacuation modelling 30 and 3D geometry for CFD simulation 40.

The automatic geometry processing module (for example as shown in figure 3) reads triangulated geometry data (e.g., in STeroLithography, STL format) and performs the following operations:
150. Geometry cropping is used to select from the entire city model the target region which is to be simulated.
160. Information about the connectivity between cells is recovered of the mesh.
170. The building ground level is detected.
180. The building ground level information is used to generate the 2D city plan for the agent-based evacuation model.
190. The mesh is modified (increased) in order to ensure a water-tight fit with the ground level.
200. Additional healing operations are applied, if necessary, to make the entire geometry water-tight.

In the following, the steps above are described in detail.

150. Geometry cropping

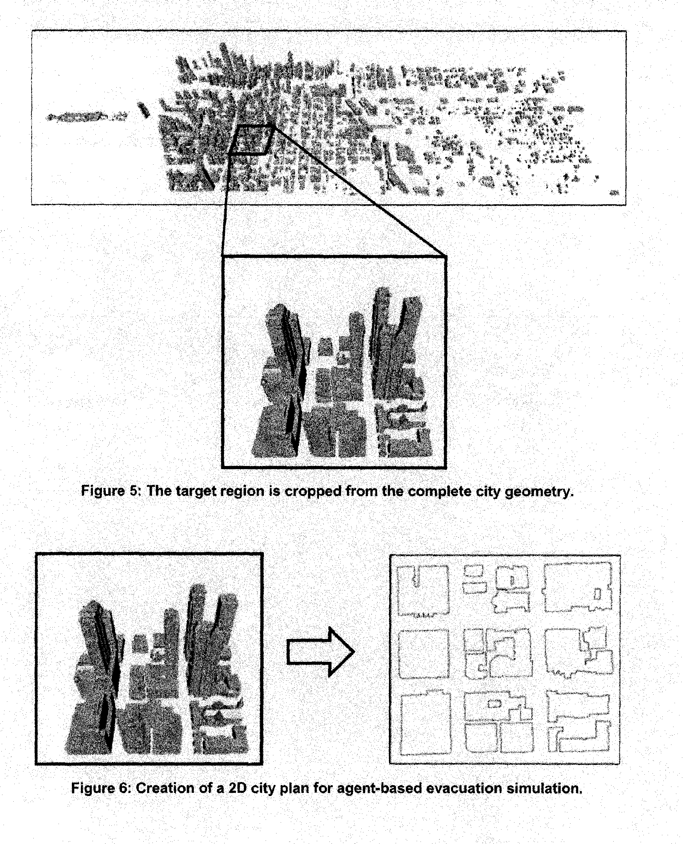

If the target of the simulation is not the entire input geometry but only a part of it, the target geometry is cropped from the source geometry. The result of the operation is geometry covering only the target section. This process is illustrated in figure 5 in which a city block modelled in 3D form is cropped from the entire city geometry.

The cropping operation takes as input the geometry of the region to be cropped. If the shape representing the boundary of the target region does not intersect any structures or buildings, the geometry of the buildings inside the region is simply copied to the destination file.

If there are structures intersected by the target boundary, there are two situations:
1. If partial structures are allowed, only the part of the structures inside the target boundary is included in the target geometry
2. If partial structures are not allowed, all intersecting structures are removed from the target geometry, which will contain only structures which do not intersect the target boundary.

The cropping method described above requires a way of computing the intersection between the source geometry and the target boundary. One efficient way of performing this operation that uses a CAD kernel, like the freely available OpenCascade kernel, is the following:
1. Use the facets from the geometry to build a 3D CAD object (a Shell structure)
2. Build a CAD solid by extruding the shape of the target area in the Z direction, for a length at least as large as the height of the highest building (and in the - Z direction if underground structures are considered as well).
3. Use readily available CAD operations (e.g. Boolean operations) to compute the intersection between the Shell structure and the solid created at Step 2

If partial structures are allowed, Step 3 will provide the part of the geometry inside the boundary.

160. Reconstructing connectivity information

Connectivity information between facets is recovered from the coordinates of nodes of the facets (each facet has 3 nodes in this embodiment). Common edges between facets are discovered by using the coordinates of the nodes. Finally, a data structure which provides, for each facet edge, a list of facets which are adjacent to it is created.

170. Building ground level detection

Connectivity information recovered at the previous step is used to detect the vertices and edges found on the building ground level. Here we consider two cases:
1. The geometry data describes only buildings but not the ground (as it is the case in figure 5).
2. The geometry data describes both the buildings and the ground.

In case 1, the set of facet edges on the bottom is a subset of the edges which neighbour a single facet. In the case in which the geometry is water-tight, the only edges which neighbour one facet are the ones on the bottom (at the lowest extreme) of the structure (the adjoining ground level is not described), so the process is complete. In the case in which the geometry is not water-tight, there are some edges which neighbour one facet which are not on the bottom. These can be removed using, for example, a threshold operation (e.g., the edges above the expected ground level are automatically removed). The edges might correspond to errors in the data. If there are no errors, the only edges satisfying the condition are the ones on the bottom, but there may also be edges connected to only one face because of a geometry error (for example a hole).

In case 2, the angle between facets is used to detect the region where geometry representing buildings, which is vertical or close to vertical, is adjacent with geometry representing ground, which is horizontal or close to horizontal. If necessary, it is possible to distinguish ground level from the tops of buildings. First, there is a check if the geometry is concave or convex, then a threshold operation is used. If the angles indicate the presence of an edge and if the geometry is convex with respect to the edge, then this indicates the top of the building. If the geometry is concave and the height is below a certain threshold, then this indicates the bottom.

180. Creation of the 2D city plan

The building ground level information obtained at the previous step is used to automatically create a 2D city plan for agent-based evacuation simulation. This is directly created from polygons that are constructed from the points and edges on the buildings ground level. For the target geometry presented in figure 5, this process is depicted in figure 6.

190. Adding new geometry elements to ensure a water-tight ground level

One of the problems that come with using low-quality city geometry is the possibility that the ground level of the buildings does not perfectly match the ground surface, which leads to fluid "leaking" inside the buildings during the CFD simulation. This can occur when different data relating to the ground surface (rather than just the building ground level) is taken into account. It is often the case that ground level data is not present in the city geometry. In many instances, only the geometry of the buildings is given. For such data, the simplest simulation assumption is that the ground level is a plane, for example with Z=0 (or the average elevation of the city). For cities with significant variation in ground level (like San Francisco) an actual map of the ground level is needed. Since ground level data and building data can come from separate sources, there is the possibility of the buildings' lower edges not lying flat on the ground; and hence of gaps that require attention such that there are no "leaks".

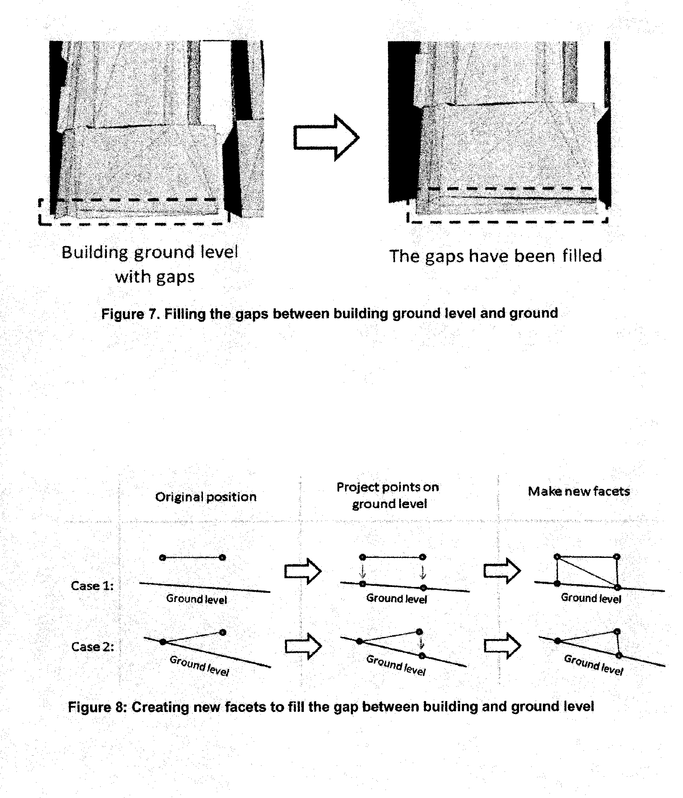

In this invention embodiment, this problem is solved by automatically adding new facets to fill the gaps between buildings and ground. This process is depicted in figure 7 where the gaps present in the original geometry (left) are filled (right).

The method used is the following:
1. Start from the set of edges found on the building ground level.
2. For each edge, for each of the two points, find the position with respect to ground level.
3. If both points are on ground level, then no facet will be added.
4. If both points are off the ground level (Case 1 in figure 8) then:
   a. Create two new points which are the projection of the original points on the ground level.
   b. Make two new facets with these points (and the two edge points).
5. If one point is on the ground and the other is off the ground (Case 2 in figure 8) then:
   a. Create one new point which is the projection of the point off the ground on the ground level.
   b. Make one new facet with this point (and the edge points).

200. Additional healing operations

If there are edges adjacent to only one facet which are not part of the building ground level, then the geometry is not water tight. The position of these "leaks" is known from the position of the edges. In such cases, methods known in the art can be used to automatically correct the geometry.

### Benefits over current state of the art

Embodiments of the present invention can lead to any or all of the following benefits for the process of running coupled CFD flooding - agent based evacuation simulations:
- Makes possible the use of lower quality generally available city geometry.
- Reduces model creation time and increases efficiency by allowing the automatic creation of modelling geometry for both the CFD flooding model and the agent based evacuation model.
- Ensures that the geometry is consistent between models, giving easy transfer of data and potentially better accuracy.
- Allows input of real-time sensor data for the CFD flooding model.
- Allows one-way or two-way coupling of the CFD and evacuation model without incurring excessive processing and/or memory costs for transfer between different geometrical models.

## Claims

1. A computer-implemented method of coupling flooding simulation and evacuation simulation in a populated area, comprising:
inputting input geometry representing physical structures in a populated area;
processing the input geometry to provide modelling geometry;
creating a computational fluid dynamics CFD model suitable for CFD analysis from the modelling geometry;
creating an evacuation model suitable for population evacuation analysis from the modelling geometry.

2. A method according to claim 1, wherein the input geometry is geometry data which is urban navigation data and/or geometry data which is not suitable for CFD analysis.

3. A method according to claim 1 or 2, including cropping the input geometry to select a target area for simulation, preferably using Boolean operations to compute the intersection between the target area and the input geometry.

4. A method according to any of the preceding claims, wherein processing of the input geometry includes recovering connectivity information related to the adjacency of facets in the input geometry.

5. A method according to any of the preceding claims, wherein processing of the input geometry includes detection of vertices and edges on ground level to form ground level data making up the modelling geometry.

6. A method according to claim 5, wherein the ground level is detected by analysing which edges of the facets neighbour one facet only and/or by analysing the angle between facets to detect a region in which vertical geometry is adjacent to horizontal geometry.

7. A method according to claim 5 or 6, wherein the evacuation model is created using the ground level data to form polygons of a two-dimensional model.

8. A method according to claim 5, 6 or 7, wherein the ground level data is made water tight, preferably by addition of one or more facets to fill one or more gaps between a lower edge of the physical structures and the actual ground level.

9. A method according to any of claims 5, 6, 7 or 8 further including one or more healing processes for correction when there are any edges adjacent to one facet only which are not at ground level.

10. A method according to any of the preceding claims, including combination of the modelling geometry with additional data related to a flooding event to form the CFD model, preferably wherein the additional data includes real-time sensor data.

11. A method according to any of the preceding claims, including running the CFD model to create flooding data, which is transferred to and used in the evacuation model; and
running the evacuation model to create agent action data, which is transferred to and used in the CFD model, and to create evacuation data.

12. A method according to any of the preceding claims, including running the CFD and evacuation models to simulate a flooding event and preferably outputting flooding data and/or evacuation data demonstrating an evacuation result of the flooding.

13. A method according to any of the preceding claims, including using simulation outputs to prepare signage and/or evacuation plans and/or emergency service strategy for the populated area.

14. A computer program which when executed on a computing device implements a method of coupling flooding simulation and evacuation simulation in a populated area, comprising:
inputting input geometry representing physical structures in a populated area;
processing the input geometry to provide modelling geometry;
creating a computational fluid dynamics CFD model suitable for CFD analysis from the modelling geometry;
creating an evacuation model suitable for population evacuation analysis from the modelling geometry.

15. An apparatus arranged to couple flooding simulation and evacuation simulation in a populated area, the apparatus comprising:
an input unit arranged to receive input geometry representing physical structures in a populated area;
a geometry processing module arranged to process the input geometry to provide modelling geometry;
a computational fluid dynamics CFD module arranged to create a CFD model suitable for CFD analysis from the modelling geometry;
an evacuation model module arranged to create an evacuation model suitable for population evacuation analysis from the modelling geometry.

## Amended claims

### Amended claims in accordance with Rule 137(2) EPC.

**1.** A computer-implemented method of coupling flooding simulation and evacuation simulation in a populated area, comprising:
inputting input geometry representing physical structures in a populated area; processing the input geometry to provide modelling geometry;
creating a computational fluid dynamics CFD model suitable for CFD analysis from the modelling geometry;
creating an evacuation model suitable for population evacuation analysis from the modelling geometry; combining of the modelling geometry with additional data related to a flooding event to form the CFD model;
running the CFD model to create flooding data, which is transferred to and used in the evacuation model; and
running the evacuation model to create agent action data, which is transferred to and used in the CFD model, and to create evacuation data.

**2.** A method according to claim 1, wherein the input geometry is geometry data which is urban navigation data and/or geometry data which is not suitable for CFD analysis.

**3.** A method according to claim 1 or 2, including cropping the input geometry to select a target area for simulation, preferably using Boolean operations to compute the intersection between the target area and the input geometry.

**4.** A method according to any of the preceding claims, wherein processing of the input geometry includes recovering connectivity information related to the adjacency of facets in the input geometry.

**5.** A method according to any of the preceding claims, wherein processing of the input geometry includes detection of vertices and edges on ground level to form ground level data making up the modelling geometry.

**6.** A method according to claim 5, wherein the ground level is detected by analysing which edges of the facets neighbour one facet only and/or by analysing the angle between facets to detect a region in which vertical geometry is adjacent to horizontal geometry.

**7.** A method according to claim 5 or 6, wherein the evacuation model is created using the ground level data to form polygons of a two-dimensional model.

**8.** A method according to claim 5, 6 or 7, wherein the ground level data is made water tight, preferably by addition of one or more facets to fill one or more gaps between a lower edge of the physical structures and the actual ground level.

**9.** A method according to any of claims 5, 6, 7 or 8 further including one or more healing processes for correction when there are any edges adjacent to one facet only which are not at ground level.

**10.** A method according to any of the preceding claims, wherein the additional data includes real-time sensor data.

**11.** A method according to any of the preceding claims, including outputting flooding data and/or evacuation data demonstrating an evacuation result of the flooding.

**12.** A method according to any of the preceding claims, including using simulation outputs to prepare signage and/or evacuation plans and/or emergency service strategy for the populated area.

**13.** A computer program which when executed on a computing device implements a method of coupling flooding simulation and evacuation simulation in a populated area according to any of the preceding claims.

**14.** An apparatus arranged to couple flooding simulation and evacuation simulation in a populated area, the apparatus comprising:
an input unit arranged to receive input geometry representing physical structures in a populated area;
a geometry processing module arranged to process the input geometry to provide modelling geometry;
a computational fluid dynamics CFD module arranged to create a CFD model suitable for CFD analysis from the modelling geometry;
an evacuation model module arranged to create an evacuation model suitable for population evacuation analysis from the modelling geometry;
a CFD simulation module arranged to create flooding data, which is transferred to and used in the evacuation model; and
an evacuation simulation module arranged to create agent action data, which is transferred to and used in the CFD model, and to create evacuation data.
